# EUROPÄISCHE PATENTSCHRIFT

(11) **EP 1 382 947 B1**
(45) Veröffentlichungstag und Bekanntmachung des Hinweises auf die Patenterteilung: **14.11.2012**
(21) Anmeldenummer: 03015426.4
(22) Anmeldetag: 09.07.2003
(51) Int. Cl.: G01G 13/00, G01G 13/02, B65D 88/62, B65D 88/66

(54) **Dosieranlage für Pulverpigmente**
Metering device for powdery pigments
Dispositif de dosage pour pigments pulvérulants

(30) Priorität: 15.07.2002 DE 10231813
(43) Veröffentlichungstag der Anmeldung: 21.01.2004
(60) Teilanmeldung: 04016282.8
(73) Patentinhaber: Finke, Michael, 32791 Lage (DE); Finke, Ingo, 31791 Lage (DE)
(72) Erfinder: Finke, Michael, 32791 Lage (DE); Finke, Ingo, 31791 Lage (DE)
(74) Vertreter: Sparing Röhl Henseler

(56) Entgegenhaltungen:
- EP-A- 0 866 000
- DE-C- 19 639 740
- GB-A- 1 322 968
- US-A- 1 570 795
- US-A- 4 345 858
- US-A- 4 488 837
- US-A- 4 775 267
- US-B1- 6 287 056

## Beschreibung

Die Erfindung betrifft einen trichterförmigen, verschließbaren wägeb Behälter für eine pneumatische Fördereinrichtung für Pulverpigmente nach dem Oberbegriff des Anspruchs 1.

Aus EP 0 866 000 A ist ein wägebehälter mit den Merkmalen des Oberbegriffs des Anspruchs 1 bekannt.

Aus DE 196 39 740 C und US 1 570 795 A sind Dosiervorrichtungen für Schüttgüter mit druckluftbeaufschlagbaren, flexiblen Innenteilen bekannt.

Pulverpigmente wie solche aus Eisenoxid, Titandioxid oder Chromoxid werden einzeln oder gemischt zur Einfärbung verschiedenster Materialien wie beispielsweise Holz, Lacke, Lebensmittel, Betonwaren, Dachsteine, Verbundsteine etc. verwendet. Sie werden üblicherweise als Sackware zu ca. 25 kg oder in sogenannten Big-Bags von 1 t von verschiedenen Herstellern beim Endverbraucher angeliefert.

Das automatische chargenweise Abwiegen und Fördern derartiger Pulverpigmente ist jedoch aufgrund der starken Brückenbildung in Behältern und Leitungen problematisch. Deshalb werden Pulverpigmente auch häufig unter Zuhilfenahme eines organischen oder anorganischen Bindemittels in eine granulatartige Konsistenz überführt, die eine gute Fließfähigkeit und Dosierbarkeit besitzt. Diese zusätzliche Behandlung ist jedoch aufwendig und verteuert das Produkt wesentlich.

Aufgabe der Erfindung ist es, einen trichterförmigen, verschließbaren wägebehälter für eine pneumatische Fördereinrichtung für Pulverpigmente nach dem Oberbegriff des Anspruchs 1 zu schaffen, der es ermöglicht, die Entleerung zu verbessern.

Diese Aufgabe wird durch die Merkmale des Anspruchs 1 gelöst.

Hierdurch wird ein Wägebehälter mit einer flexiblen Innenauskleidung geschaffen, wobei der Zwischenraum zwischen der Außenwandung des Behälters und der Innenauskleidung pulsierend druckluftbeaufschlagbar ist entsprechend eines vorbestimmten Gewichts einer Menge an Pulverpigmenten.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.
Fig. 1 zeigt schematisiert eine Frontansicht einer Dosieranlage für Pulverpigmente.
Fig. 2 zeigt schematisiert eine Wägeeinrichtung in Seitenansicht für die Dosieranlage von Fig. 1.
Fig. 3 zeigt schematisiert im Schnitt ausschnittweise die Wägeeinrichtung von Fig. 2.
Fig. 4 zeigt schematisiert die Wägeeinrichtung von Fig. 2 ausschnittweise und teilweise aufgeschnitten.
Fig. 5 zeigt schematisiert ausschnittweise und im Schnitt ein Injektorrohr für eine Förderleitung der Dosieranlage von Fig. 1.
Fig. 6 zeigt schematisiert ausschnittweise und im Schnitt einen Druckbehälter der Dosieranlage von Fig. 1.

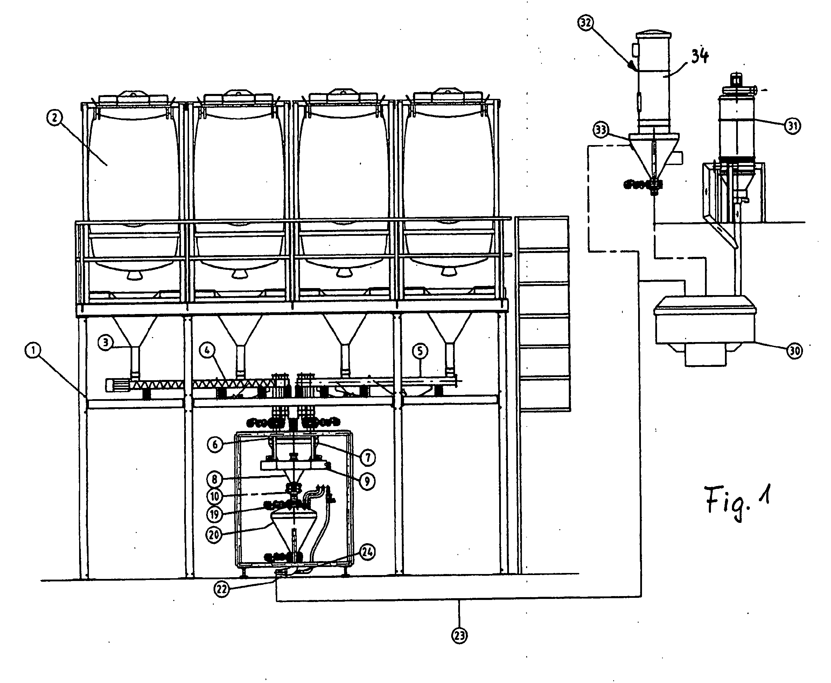

Die in Fig. 1 dargestellte Dosieranlage umfaßt eine Bühnenkonstruktion 1, in die oben mehrere, Pulverpigment enthaltende Big-Bags 2 einhängbar sind. Anstelle der Big-Bags 2 oder zusätzlich hierzu können auch Wechselcontainer, in die Pulverpigment in Form von Sackware entleert wird, vorgesehen sein. Die Big-Bags 2 oder Wechselcontainer werden mittels Kran oder Gabelstapler auf die Bühnen-Konstruktion 1 aufgesetzt. Beispielweise sind vier Big-Bags 2 und/oder Wechselcontainer für die vier Grundfarben vorgesehen; wobei durch entsprechendes Mischen die unterschiedlichsten Farbtöne herstellbar sind.

Unterhalb der Big-Bags 2 oder Wechselcontainer sind Einlauftrichter 3 vorgesehen, wobei die Wechselcontainer direkt über eine angebaute Entleerklappe und einen Stutzen in den zugehörigen Einlauftrichter 3 entleerbar sind, während die Big-Bags 2 über Vibrationsaustragsböden (nicht dargestellt) und den zugehörigen Einlauftrichter 3 entleerbar sind.

Von den jeweiligen Einlauftrichtern 3 gelangt das Pulverpigment zu einer zugehörigen Fördereinrichtung etwa in Form einer Förderschnecke 4 oder eines Vibrationsförderers 5, die dazu dienen, Pulverpigment über einen an ihrem Ende angeordneten, dünnen, flexiblen Schlauch 6 etwa aus Tuch, der als Staubfilter dient, in eine Wägeeinrichtung 7 zu fördern.

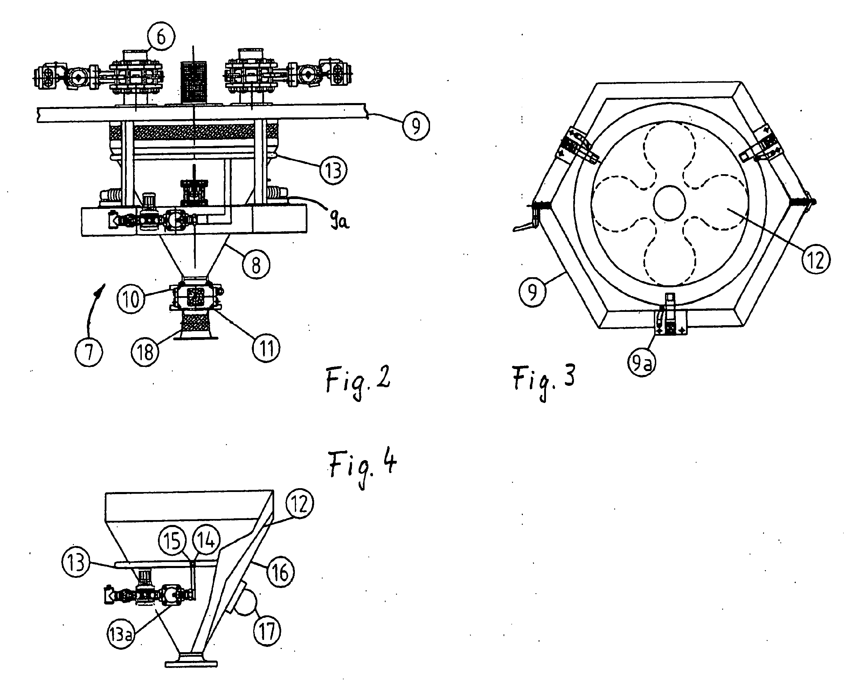

Die Wägeeinrichtung 7 umfaßt einen durch eine Verschlußklappe verschließbaren Wägebehälter 8, der im dargestellten Ausführungsbeispiel trichterförmig ausgebildet und in einem Rahmen 9 über Druckmeßdosen 9a bezüglich seines Gewichts abgetastet aufgehängt ist. Der Wägebehälter 8 besitzt einen bodenseitigen Auslaß 10, der über einen Verschluß 11, etwa eine Entleerklappe, entleerbar ist. Ferner ist der Wägebehälter 8 innenseitig mit einer flexiblen Innenauskleidung 12 aus gummielastischem Material versehen, die am oberen und unteren Ende der Innenwandung des Wägebehälters 8 angeklebt oder anvulkanisiert ist, während außenseitig zum Wägebehälter 8 eine Ringleitung 13 zur Druckluftzufuhr vorgesehen ist. Von der Ringleitung 13 führen mehrere Leitungen 14 zu Lufteinlaßdüsen 15 in der Wandung des Wägebehälters 8, über die Luft in den Zwischenraum 16 zwischen der Innenwandung des Wägebehälters 8 und der Innenauskleidung 12 eingeführt werden kann, so daß sich die Innenauskleidung 12 etwa wie in Fig. 3, 4 gezeigt unter Drucklufteinwirkung nach innen ausbeulen kann.

Die Druckluftzufuhr zur Ringleitung 13 ist mit einer Steuerung 13a versehen, die es ermöglicht, Luftstöße unterschiedlicher Länge und mit unterschiedlicher Taktung und gegebenenfalls unterschiedlichen Druck in dem Zwischenraum 16 zu erzeugen, wodurch die Innenauskleidung 12 entsprechend unterschiedlich und unterschiedlich weit nach innen ausgebeult wird. - Diesbezüglich hat sich beispielsweise ein Zyklus einer Länge von insgesamt etwa 20 sec bewährt, der drei Luftstöße einer Länge von 5 sec, 3 sec und 8 sec mit entsprechenden Pausen unter schneller Entlüftung umfaßt.

Der Wägebehälter 8 ist ferner mit einer auch gegen Überdruck ventilierten Austrittsöffnung (nicht dargestellt) versehen, um die durch die Luftstöße in den Zwischenraum 16 eingeführte Luft nach außen abzulassen.

Der Wägebehälter 8 kann zusätzlich mit einem an seiner Außenwandung angebauten Vibrator 17 versehen sein, um das Sammeln von Pulverpigment im unteren Teil des Wägebehälters 8 und sein Entleeren zu unterstützen.

Der Wägebehälter 8 wird nach Erreichen eines vorbestimmten Gewichts durch Aufnahme einer entsprechenden Menge an Pulverpigmenten zum Entleeren über die Lufteinlaßdüsen 15 entsprechend getaktet mit Druckluft beaufschlagt, wodurch die Innenauskleidung 12 wellenartig mehrfach nach innen bewegt wird. Außerdem ist es zweckmäßig, das Innere des Wägebehälters 8 beim Öffnen seines bodenseitigen Auslasses 10 von unten her mit einem Druckluftstoß zu beaufschlagen, um so zusätzlich vom Pulverpigment gebildete Brücken aufzubrechen. Zu diesem Zweck kann eine Lanze benutzt werden, es kann aber auch ein unter dem Wägebehälter 8 angeordneter mit einer Verschlußklappe 19 versehener Druckbehälter 20 mit Luftdruck beaufschlagt und zu Beginn des Entleerens zum Wägebehälter 8 hin geöffnet werden. Durch die pulsierende Bewegung der Innenauskleidung, gegebenenfalls unterstützt durch den Vibrator 17, kann der Wägebehälter 8 vollständig entleert werden. Gegebenenfalls können noch Luftdüsen vorgesehen sein, die die vollständige Entleerung unterstützen.

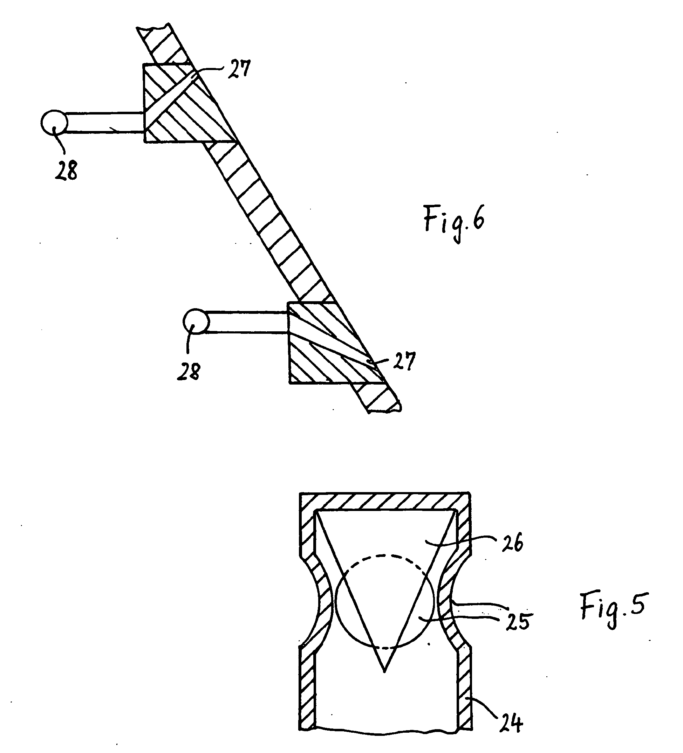

Der Wägebehälter 8 ist über einen dünnen flexiblen Schlauch 18 aus einem Tuch und mit einem unter dem Wägebehälter 8 angeordneten, trichterförmigen, eine Verschlußklappe 19 aufweisenden Druckbehälter 20 versehen. An diesen schließt sich ein durch einen Verschluß 21, etwa eine Entleerklappe oder einen Schieber, verschließbarer Auslaßstutzen 22 an, der seitlich gekrümmt und mit einer pneumatischen Förderleitung 23, etwa einem Förderschlauch, verbunden ist. Axial in den Auslaßstutzen 22 erstreckt sich in Richtung der Förderleitung 23 ein mit Druckluft beaufschlagbares Injektorrohr 24, das im Auslaßstutzen 22 ein geschlossenes Ende mit benachbart hierzu angeordneten seitlichen Austrittsöffnungen 25 aufweist, vgl. Fig. 5. Zweckmäßigerweise befindet sich benachbart zu den Austrittsöffnungen 25 ein Kegel 26 zum Leiten der austretenden Druckluft zu den Austrittsöffnungen 25.

Der Druckbehälter 20 ist mit einer Vielzahl von Lufteinblasdüsen 27 versehen, die beim dargestellten Ausführungsbeispiel in zwei übereinander angeordneten Reihen vorgesehen sind, wobei jede Reihe über eine entsprechende Ringleitung 28 gespeist wird, vgl. Fig. 6. Hierbei sind die Lufteinblasdüsen 27 der unteren Reihe nach unten und die der oberen Reihe nach oben gerichtet. Hierdurch kann einerseits ein entsprechender Luftdruck im Druckbehälter 20 ausgebildet werden, andererseits können hierdurch die Innenwände des Druckbehälters 20 von Resten von Pulverpigment freigeblasen und das Pigment aufgelockert werden. Zum pneumatischen Fördern der Pulverpigmente wird im allgemeinen über diesen im Druckbehälter 20 nur ein relativ geringer Druck von etwa 0,5 bis 1 bar aufgebaut. Das Injektorrohr 24 saugt und transportiert mit den hieraus austretenden Luftstrahlen das Pulverpigment aus dem Druckbehälter 20 durch die Förderleitung 23.

Der Druckbehälter 20 kann zusätzlich ebenso wie der Wägebehälter 8 in einem Gestell 29 angeordnet über Meßdosen bezüglich seines Gewichts abgetastet werden, um überprüfen zu können, ob er vollständig entleert wurde.

Die Förderleitung 23 kann direkt zu einem gegebenenfalls auch erhöht angeordneten Verbraucher 30, etwa einem Mischer für Beton od.dgl.

Gegebenenfalls kann die Förderleitung 23 auch zu einem gegebenenfalls erhöht angeordneten, siloartigen Zwischenspeicher 32 führen, von dem das Pulverpigment dann dem Verbraucher 30 zuführbar ist.

Der Zwischenspeicher 33 ist zweckmäßigerweise entsprechend dem Wägebehälter 8 ausgebildet und weist dann einen trichterförmigen, verschließbaren Speicherbehälter 32 mit einem bodenseitigen Auslaß auf, der an der Innenseite seiner Außenwandung eine flexible Innenauskleidung aufweist, wobei der Zwischenraum zwischen der Außenwandung und der Innenauskleidung pulsierend druckluftbeaufschlagbar ist. Da dies der Ausgestaltung des Wägebehälters 8 entspricht, ist dies nicht gezeichnet. Aufgesetzt auf den Speicherbehälter 32 ist ein Patronenfilter 34, um die Förderluft auszufiltern.

Die Fördereinrichtung mit dem Druckbehälter 20, dem Auslaßstützen 22 und dem Injektorrohr 24 läßt sich auch mit einer anderen als der dargestellten und beschriebenen Wägeeinrichtung 7 verwenden. Ebenso lassen sich die Behälter 8, 33 im Zusammenhang mit anderen Fördereinrichtungen verwenden.

Die mit Pulverpigment in Berührung kommenden Teile, insbesondere die Innenwände bzw. lnnenauskleidungen der Behälter 8, 20, 33 und die entsprechenden Flächen von deren Verschlüssen, aber auch die Fördereinrichtungen 4, 5 und die Förderleitung 23 sind zweckmäßigerweise mit einer Beschichtung aus einem zweikomponentigen Epoxidharz versehen, die das Anhaften von Partikeln der Pulverpigmente weitgehend vermeiden.

## Patentansprüche

1. Trichterförmiger, verschliessbarer Wägebehälter (8) für eine pneumatische Fördereinrichtung für Pulverpigmente mit bodenseitigem Auslass und einer flexiblen Innenauskleidung (12) aus einem gummielastischen Material, wobei der Zwischenraum (16) zwischen der Aussenwandung des Wägebehälters (8) und der Innenauskleidung pulsierend mit unterschiedlichen Luftmengen und unterschiedlichen Taktungen mit Druckluft beaufschlagbar ist und in einem Rahmen (9) unter Zwischenschaltung von Messdosen zur Überwachung seines Gewichts abgestützt angeordnet ist, **dadurch gekennzeichnet, dass** in der Aussenwandung mehrere, längs des Umfangs verteilte, über eine Ringleitung (13) mit einer mit einer Steuerung (13a) versehenen Druckluftzufuhr verbundene Lufteinlassdüsen (15) angeordnet sind, über die nach Erreichen eines vorbestimmten Gewichts durch Aufnahme einer entsprechenden Menge an Pulverpigmenten entsprechend getaktet mit Druckluft die Druckluftbeaufschlagung im Zwischenraum (16) erfolgt, wodurch die Innenauskleidung (12) wellenartig mehrfach nach innen bewegt wird.

2. Behälter nach Anspruch 1, **dadurch gekennzeichnet, dass** er nach dem Öffnen seines Auslasses durch einen durch den Auslass eintretenden Luftstoss beaufschlagbar ist.

3. Behälter nach Anspruch 1 oder 2, **dadurch gekennzeichnet, dass** alle mit Pulverpigment in Berührung gelangenden Teile mit einer Beschichtung aus einem zweikomponentigen Epoxidharz versehen sind.

## Claims

1. Hopper-like, closable weighing container (8) for a pneumatic conveying arrangement for powder pigments with an outlet at the base and with a flexible inner lining (12) made of an elastomeric material, wherein the interspace (16) between the outer wall of the weighing container (8) and the inner lining can be pulsatingly subjected to compressed air in different quantities and at different timings and the weighing container is supported in a frame (9) with the interposition of pressure cells for monitoring the weight thereof, **characterized in that** the outer wall contains a plurality of circumferentially distributed air-inlet nozzles (15) which are connected, via an annular line (13), to a compressed-air supply, provided with a control means (13a), and via which, once the weighing container has reached a predetermined weight by accommodating a corresponding quantity of powder pigments, the interspace (16) is subjected to the action of compressed air in a correspondingly cyclic manner, as a result of which the inner lining (12) is moved inwards a number of times in undulating fashion.

2. Container according to claim 1, **characterized in that**, once its outlet has been opened, the container can be subjected to the action of a surge of air passing in through the outlet.

3. Container according to claim 1 or 2, **characterized in that** all the parts which come into contact with powder pigment are provided with a coating made of a two-component epoxy resin.

## Revendications

1. Conteneur à pesée (8) obturable et en forme d'entonnoir pour installation d'alimentation pneumatique pour pigments pulvérulents avec une sortie du côté du sol et avec un revêtement intérieur (12) flexible en matériau élastique caoutchouteux, où l'espace intermédiaire (16) entre la paroi externe dudit conteneur à pesée (8) et ledit revêtement intérieur est alimentable avec de l'air comprimé par des impulsions d'air d'amplitudes variables, et est disposé et accroché dans un cadre (9) sous un circuit intermédiaire de boîtiers de mesure pour la surveillance de son poids, **caractérisé en ce que** plusieurs buses d'injection d'air (15) sont disposées dans ladite paroi externe, réparties le long de sa périphérie et reliées par une conduite annulaire (13) à une entrée d'air comprimé munie d'une commande (13a), et par lesquelles est réalisée l'alimentation en air comprimé dans ledit espace intermédiaire (16) après l'atteinte d'un poids pré-déterminé par la réception d'une quantité correspondante de pigments pulvérulents cadencée de façon correspondante avec l'air comprimé, et où ledit revêtement intérieur (12 est mû vers l'intérieur dans un mouvement de vagues successives.

2. Conteneur à pesée selon la revendication 1, **caractérisé en ce qu'**il est alimentable, après l'ouverture de sa dite sortie, par un apport d'air pénétrant par ladite sortie.

3. Conteneur à pesée selon la revendication 1 ou 2, **caractérisé en ce que** toutes les parties susceptibles d'être en contact avec du pigment pulvérulent sont prévues avec un revêtement en résine époxy à deux composants.
